# FASCICULE DE BREVET EUROPEEN

(11) **EP 0 475 794 B1**
(45) Date de publication et mention de la délivrance du brevet: **07.12.1994**
(21) Numéro de dépôt: 91402134.0
(22) Date de dépôt: 30.07.1991
(51) Int. Cl.: B60T 13/57

(54) **Procédé de réglage de la valeur du saut d'un servomoteur pneumatique d'assistance au freinage et servomoteuer pour la mise en oeuvre de ce procédé**
Verfahren für die Regelung des Sprungwertes eines pneumatischen Bremskraftverstärkers, sowie Bremskraftverstärker zur Durchführung dieses Verfahrens
Process for regulating the jump value of a pneumatic brake booster, and brake booster for carrying out that process

(30) Priorité: 07.09.1990 FR 9011099
(43) Date de publication de la demande: 18.03.1992
(73) Titulaire: ALLIEDSIGNAL EUROPE SERVICES TECHNIQUES, 93700 Drancy (FR)
(72) Inventeur: Gautier, Jean-Pierre, Bendix Europe Services Techn, F-93700 Drancy (FR)
(74) Mandataire: Bentz, Jean-Paul

(56) Documents cités:
- DE-A- 3 205 268
- GB-A- 2 064 690
- GB-A- 2 086 504
- GB-A- 2 140 518

## Description

La présente invention concerne les servomoteurs d'assistance au freinage pour, en particulier, les véhicules automobiles et s'applique plus particulièrement au réglage du saut de tels servomoteurs.

Un servomoteur d'assistance au freinage tel que défini ci-dessus comprend généralement une tige de commande qui se déplace vers l'avant du véhicule lorsque son conducteur actionne la pédale de frein. Ce déplacement de la tige de commande est transmis à un élément appelé plongeur qui actionne à son tour des moyens d'assistance. En général, ces moyens d'assistance consistent en une valve à trois voies dont la fonction est d'interrompre la communication entre les chambres avant et arrière du servomoteur, dans lesquelles règne en position de repos, la même pression réduite, et de mettre la chambre arrière en relation avec une source de pression sous une pression supérieure de façon à créer une différence de pression sur les deux faces d'un piston séparant ces deux chambres. Le piston se déplace alors vers l'avant en étant solidaire d'une tige de sortie ou tige de poussée agissant à son tour sur un maître-cylindre engendrant alors une augmentation de pression dans le circuit hydraulique de freinage du véhicule pour freiner ce dernier.

De façon connue, le piston servant à transmettre la force d'assistance à la tige de sortie ou tige de poussée agit sur cette dernière au travers d'un disque de réaction réalisé en un matériau déformable tel qu'un élastomère. Au repos, un faible jeu existe entre l'extrémité avant du plongeur et le disque de réaction.L'extrémité arrière du plongeur forme un siège de valve annulaire coaxial à un autre siège de valve annulaire formé sur le piston, un organe formant clapet coopérant avec ces sièges de valve.

Dans de tels servomoteurs, la réaction à la pédale de frein ne commence à apparaître que lorsque la force d'assistance engendrée par le servomoteur dépasse un certain seuil. Ce seuil est appelé le "saut" du servomoteur. Il constitue une caractéristique importante du servomoteur. En effet, si l'existence du saut est imposée pour une réponse immédiate des freins lors de l'actionnement de la pédale, les constructeurs de véhicules souhaitent généralement que la valeur de ce saut reste dans certaines limites pour que l'assistance n'atteigne pas une valeur trop grande sans augmentation de la réaction à la pédale de frein.

De DE-A-3 205 268 est connu un moyen pour régler la charge du ressort de tige de commande pour ajuster la valeur du saut. Cependant, compte tenu notamment des tolérances de fabrication des différentes pièces constituant le servomoteur, il peut exister des différences importantes dans la valeur du saut d'un servomoteur à un autre dans une production en série.

On connaît par le document FR-A-2 480 898 un procédé de réglage de la valeur du saut d'un servomoteur, procédé selon lequel on ajuste le jeu existant entre la face avant du plongeur et le disque de réaction.Ce procédé présente de nombreux inconvénients en ce sens qu'il est long et compliqué et que de plus il nécessite pour sa mise en oeuvre l'utilisation de moyens ultra-sonores ou de chauffage pour déformer de manière plastique une partie de valve comportant une pièce supplémentaire entre le plongeur et le disque de réaction. L'inconvénient majeur de ce procédé réside de plus dans le fait que le réglage doit être effectué avant l'assemblage du disque de réaction, et par conséquent du servomoteur lui-même. Il s'ensuit que les différentes pièces doivent être soigneusement appariées.

La présente invention a donc pour but un procédé de réglage de la valeur du saut d'un servomoteur qui soit de mise en oeuvre simple et rapide, de façon fiable et peu onéreuse, et qui puisse en outre être appliqué à un servomoteur après son assemblage.

Dans ce but, la présente invention propose un procédé de réglage de la valeur du saut d'un servomoteur d'assistance au freinage, servomoteur dans lequel sont montés de façon mobile un piston creux d'assistance divisant le servomoteur en une chambre avant et une chambre arrière, une tige de commande sollicitée vers l'arrière par un ressort de tige et portant un plongeur logé dans le piston, l'extrémité arrière du plongeur formant un premier siège de valve annulaire concentrique à un second siège de valve annulaire porté par le piston d'assistance, les premier et second sièges de valve coopérant avec un clapet annulaire porté par le piston d'assistance et sollicité vers l'avant par un ressort de clapet, un disque de réaction étant interposé entre une face avant annulaire du piston d'assistance et une face arrière d'une tige de poussée, procédé caractérisé en ce qu'il comporte les étapes suivantes :
- mettre la chambre avant en dépression,
- charger le ressort de clapet,
- appliquer à la tige de poussée un effort égal à la force d'assistance correspondant au saut désiré du servomoteur,
- mettre en contact la face avant du palpeur et la face arrière du disque de réaction,
- décharger le ressort de clapet jusqu'à l'ouverture du premier siège de valve,
- charger le ressort de tige.

La présente invention a également pour but de réaliser un servomoteur d'assistance au freinage dont le saut soit réglable de façon simple, rapide, fiable et peu onéreuse, ce réglage pouvant être effectué sur le servomoteur déjà assemblé.

Dans ce but, la présente invention propose un servomoteur d'assistance au freinage dans lequel sont montés de façon mobile un piston creux d'assistance, une tige de commande sollicitée vers l'arrière par un ressort de tige et portant un plongeur logé dans une partie tubulaire arrière du piston, l'extrémité arrière du plongeur formant un premier siège de valve annulaire concentrique à un second siège de valve annulaire porté par le piston d'assistance, les premier et second sièges de valve coopérant avec un clapet annulaire porté par le piston d'assistance et sollicité vers l'avant par un ressort de clapet, un disque de réaction étant interposé entre une face avant annulaire du piston d'assistance et une face arrière d'une tige de poussée, servomoteur dans lequel le ressort de clapet prend appui sur la face arrière du clapet annulaire et sur la tige de commande.

Un mode de réalisation particulier de la présente invention va maintenant être décrit à titre d'exemple illustratif en référence aux dessins annexés sur lesquels :
- la Figure 1 est une vue de côté, en coupe longitudinale, représentant la partie centrale d'un servomoteur d'assistance au freinage de conception classique,
- la Figure 2 est une vue de côté, en coupe longitudinale, représentant la partie centrale d'un servomoteur d'assistance au freinage dont la valeur du saut peut être réglée conformément à l'invention.

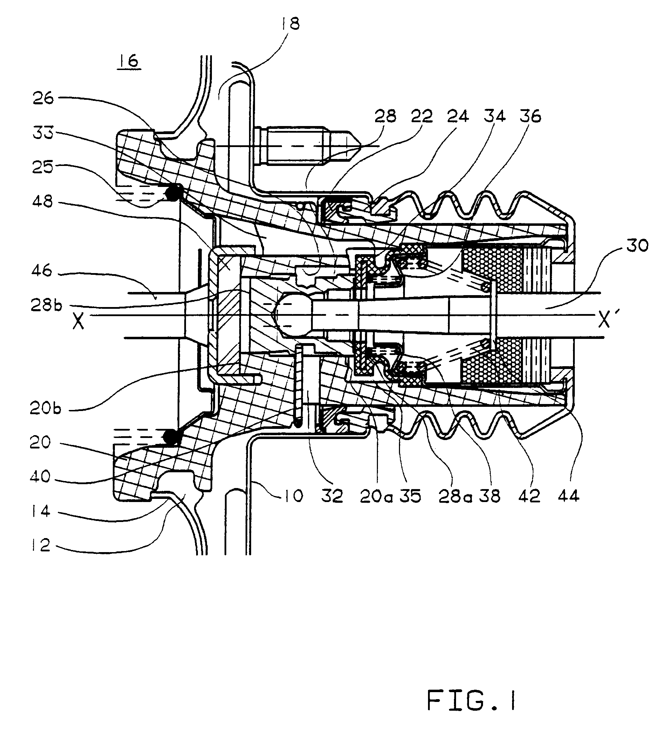

La Figure 1 représente en coupe la partie centrale d'un servomoteur d'assistance au freinage prévu pour être placé de façon conventionnelle entre la pédale de frein d'un véhicule et le maître-cylindre commandant le circuit de freinage hydraulique de ce véhicule. Par convention, on appelle "avant" du servomoteur la partie de ce dernier tournée vers le maître-cylindre et "arrière" du servomoteur la partie tournée vers la pédale de frein. Sur la Figure 1,
l'avant est à gauche et l'arrière est à droite.

Le servomoteur de la Figure 1 comprend une enveloppe extérieure 10 en forme de coquille, présentant une symétrie de révolution autour d'un axe X-X′. Seule la partie centrale arrière de cette enveloppe 10 est représentée sur la Figure 1.

Une membrane souple en élastomère 12, renforcée dans sa partie centrale par un disque support métallique 14, définit à l'intérieur de l'espace délimité par l'enveloppe 10 une chambre avant 16 et une chambre arrière 18 . Le bord périphérique extérieur (non représenté) de la membrane 12 est fixé de façon étanche sur l'enveloppe extérieure 10. Le bord périphérique intérieur de cette même membrane se termine par un bourrelet reçu de façon étanche dans une gorge annulaire formée sur la surface périphérique extérieure d'un piston creux d'assistance 20 disposé selon l'axe X-X′ du servomoteur. Ce piston creux 20 se prolonge vers l'arrière par une partie tubulaire qui traverse de façon étanche la paroi arrière de l'enveloppe 10. L'étanchéité de cette traversée est assurée par un joint d'étanchéité annulaire armé 22 qui est fixé par une bague 24 dans une partie centrale tubulaire prolongeant vers l'arrière la paroi arrière de l'enveloppe 10.

Un ressort de compression 25 interposé entre le piston 20 et la paroi avant (non représentée) de l'enveloppe extérieure 10 maintient normalement le piston dans sa position arrière de repos illustrée sur la Figure 1, dans laquelle la chambre arrière 18 présente son volume minimal et la chambre avant 16 son volume maximal.

Dans sa partie centrale située entre la partie arrière tubulaire et la partie avant dans laquelle est fixée la membrane 12, le piston 20 présente un alésage étagé 26 dans lequel est reçu en coulissement un plongeur 28 présentant également une symétrie de révolution autour de l'axe X-X′. L'extrémité avant d'une tige de commande 30 du servomoteur, disposée également selon l'axe X-X′, est montée rotulante dans le plongeur 28. L'extrémité arrière de cette tige 30, qui fait saillie à l'extérieur de la partie tubulaire du piston 20, est commandée directement par la pédale de frein du véhicule (non représentée).

L'espace annulaire situé entre la tige de commande 30 et la partie tubulaire du piston communique avec l'extérieur à l'arrière du servomoteur. Vers l'avant, ce même espace annulaire peut communiquer avec la chambre arrière 18 au travers d'un passage radial 32 formé dans la partie centrale du piston, lorsque une valve à trois voies est actionnée. Cette valve à trois voies comporte un clapet annulaire 34 monté dans la partie tubulaire du piston et deux sièges de valve annulaires 20a et 28a formés respectivement sur la partie centrale du piston 20 et sur le plongeur 28.

Le clapet 34 constitue l'extrémité avant, de plus petit diamètre, d'un manchon souple en élastomère dont l'extrémité arrière se termine par un bourrelet monté de façon étanche à l'intérieur de la partie tubulaire du piston 20. Ce bourrelet est maintenu en place par une coupelle métallique 36, sur laquelle prend appui un ressort de compression 38 ou ressort de clapet tendant à déplacer le clapet 34 vers l'avant. Le clapet 34 est constitué du matériau élastomère du manchon souple dans lequel est disposé un insert rigide 35 destiné à assurer son indéformabilité.

Le siège de valve annulaire 28a est formé sur la face d'extrémité arrière du plongeur 28. De façon comparable, le siège de valve 20a est formé sur la face d'extrémité arrière de la partie centrale du piston 20, autour du siège 28a. Selon la position du plongeur 28 à l'intérieur du piston 20, cet agencement permet au clapet 34 d'être constamment en appui étanche avec l'un au moins des sièges de valve 28a et 20a sous l'action du ressort 38.

Un second passage 33 est formé dans la partie centrale du piston 20, approximativement parallèlement à son axe X-X′, pour faire communiquer la chambre avant 16 du servomoteur avec une chambre annulaire formée autour du clapet 34, à l'intérieur de la partie tubulaire du piston. Lorsque le plongeur 28 occupe sa position arrière de repos illustrée sur la Figure, dans laquelle le clapet 34 est en appui étanche sur le siège 28a du plongeur et écarté du siège 20a du piston, les chambres avant 16 et arrière 18 du servomoteur communiquent ainsi entre elles par les passages 33 et 32.

De façon connue, au moins un organe de butée 40 monté dans la partie centrale du piston 20 délimite la course axiale du plongeur 28 à l'intérieur de ce dernier. Le plongeur 28 est normalement maintenu dans sa position arrière de repos définie par l'organe 40 au moyen d'un ressort de compression 42 ou ressort de tige interposé entre la coupelle 36 et une rondelle 44 elle-même en appui sur un épaulement formé sur la tige de commande 30.

Dans sa partie centrale, le piston 20 comprend une face avant annulaire 20b au centre de laquelle débouche l'alésage 26. Cette face avant annulaire 20b du piston 20 agit sur la face arrière d'une tige de poussée 46 au travers d'un disque de réaction 48 en un matériau déformable tel qu'un élastomère. De façon plus précise, la tige de poussée 46 et le disque de réaction 48 sont disposés selon l'axe X-X′ du servomoteur, dans le prolongement de la tige de commande 30 et du plongeur 28.

Lorsque le servomoteur est installé sur un véhicule, la chambre avant 16 communique en permanence avec une source de vide.

Dans un premier temps, l'enfoncement de la pédale de frein par le conducteur du véhicule a pour effet d'égaler l'effort de précontrainte du ressort 42 diminué de l'effort de précontrainte du ressort 38. Au cours du léger déplacement qui s'ensuit, les chambres avant 16 et arrière 18 du servomoteur sont alors isolées l'une de l'autre. Dans cette première phase de l'actionnement du servomoteur,la force exercée sur la tige de commande 30 n'engendre aucune force sur la tige de poussée 46 à la sortie du servomoteur.

Dans une deuxième phase de l'actionnement du frein, le plongeur est déplacé suffisamment vers l'avant pour que le clapet 34 soit en contact étanche avec le siège 20a du piston et légèrement espacé du siège 28a du plongeur. Dans ces conditions, la chambre arrière 18 du servomoteur est isolée de la chambre avant 16 et communique avec l'atmosphère. Une force d'assistance est donc engendrée qui tend à déplacer le piston 20 vers l'avant. Ce déplacement est transmis à la tige de poussée 46 par le disque de réaction 48.

Au cours de cette deuxième phase d'actionnement des freins, la force d'assistance exercée par le piston 20 ne déforme pas suffisamment le disque de réaction 48 pour que ce dernier remplisse totalement l'espace qui le sépare initialement du plongeur 28. Par conséquent, la force de sortie appliquée au maître-cylindre par la tige de sortie 46 augmente brutalement, alors que la force exercée sur la tige de commande 30 reste inchangée.

Cette augmentation brusque de l'effort de sortie correspond au saut du servomoteur, c'est à dire au seuil au delà duquel la force d'assistance engendrée dans le servomoteur et exercée sur le disque de réaction 48 par le piston 20 devient suffisante pour que la face avant 28b du plongeur vienne au contact du disque de réaction 48.

Dans une troisième phase de l'actionnement des freins, toute augmentation de l'effort exercé par le conducteur sur la tige de commande 30 engendre une augmentation de la force d'assistance exercée sur le piston, qui se traduit par une augmentation de la réaction à la pédale exercée par le disque 48 sur le plongeur 28, alors au contact l'un de l'autre.

Au cours des deuxième et troisième phases, la face avant du clapet 34 et les sièges 20a et 28a sont pratiquement alignés. On appelle cette position "position d'équilibre".

D'après les explications qui précèdent, on comprend bien que le saut du servomoteur, c'est à dire la valeur de l'augmentation brusque de l'effort de sortie aussi bien que le moment où elle intervient pendant le mouvement du plongeur 28 par rapport au piston 20, soit encore la deuxième phase décrite plus haut, est d'une importance capitale pour le fonctionnement du servomoteur. Cependant, comme déjà indiqué, en fonction des tolérances de fabrication des différentes pièces constituant le servomoteur et des matériaux composant le disque de réaction, il peut exister des différences importantes dans la valeur du saut, d'un servomoteur à un autre, dans une production en série.

Conformément à la présente invention,il est proposé un procédé de réglage pour diminuer ou meme annuler la plage de variation du saut du servomoteur due aux diverses tolérances de fabrication, ou même pour obtenir un servomoteur pouvant posséder toute valeur de saut désirée,et ce sans avoir à démonter le servomoteur.

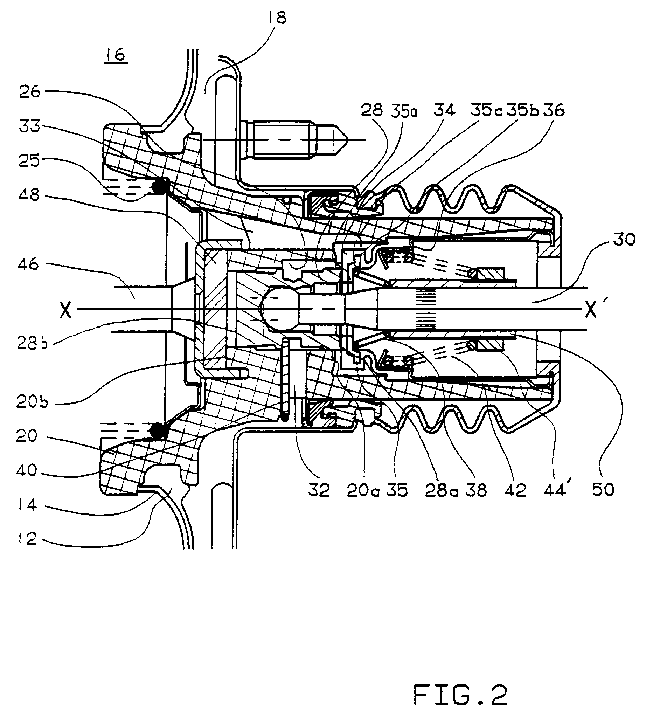

Un tel procédé est illustré en référence à la Figure 2, où les mêmes éléments que ceux de la Figure 1 portent les mêmes signes de référence.

On voit sur la Figure 2 un servomoteur modifié pour pouvoir mettre en oeuvre le procédé conforme à l'invention. Sur la Figure 2 ne figurent que les éléments du servomoteur nécessaires à l'exposé du procédé de l'invention, c'est à dire ceux qui sont contenus dans la partie tubulaire arrière du piston 20.

Sur la Figure 2, on voit que le ressort de clapet 38, prenant appui sur la face arrière du clapet 34 d'une part, prend appui d'autre part sur la tige de commande 30. Plus précisément, le ressort de clapet 38 prend appui sur l'extrémité avant d'un manchon 50 engagé sur la tige de commande 30, par exemple par vissage. De plus, la rondelle 44 se présente sous la forme d'un écrou 44′ vissé sur le manchon 50. La coupelle métallique 36 sert uniquement d'appui pour le ressort de tige 42 et de maintien du bourrelet du clapet dans la partie tubulaire arrière du piston 20.

De plus, l'insert rigide 35 est réalisé non plus selon une configuration plane en forme de rondelle, mais selon une configuration étagée. De façon plus précise, l'insert est conformé en deux plans, un premier plan 35a , correspondant à la partie du clapet 34 coopérant avec le siège de valve 28a du plongeur 28, et situé en avant du côté de la périphérie intérieure la plus proche de l'axe X-X′ et un plan 35b, correspondant à la partie du clapet 34 coopérant avec le siège de valve 20a du piston 20 et situé en arrière du côté de la périphérie extérieure de l'insert 35, les deux parties 35a et 35b étant réunies par une partie 35c en forme de tronc de cône. De la sorte, l'insert 35 procure au clapet 34 une grande rigidité pour le siège de valve 28a du clapet 28, et une déformabilité ou élasticité importante pour le siège de valve 20a du piston 20.

Ainsi constitué, la valeur du saut du servomoteur représenté sur la Figure 2 peut facilement être ajustée selon le procédé qui va maintenant être décrit sans qu'il soit besoin de démonter le servomoteur. On a vu plus haut que le saut du servomoteur intervient lorsque l'actionnement de la tige de commande 30 fait avancer le plongeur 28, et le clapet 34 poussé par le ressort de clapet 38, jusqu'à ce que ce clapet 34 soit en contact avec le siège de valve 20a du piston 20, et que le plongeur 28 soit légèrement espacé du clapet 34.

Dans un premier temps, après assemblage du servomoteur, et celui-ci étant au repos, on relie la chambre avant 16 du servomoteur à une source de vide de façon conventionnelle. Une pression réduite s'installe donc dans la chambre avant 16 et dans la chambre arrière 18 du servomoteur qui communiquent par le passage 33, le volume annulaire autour du plongeur 28 et le passage 32.

Puis on visse le manchon 50 sur la tige de commande 30 de façon à appliquer au ressort de clapet 38 une charge supérieure à celle qui lui sera appliquée en fonctionnement permanent. De cette façon, on met en contact le clapet 34 avec les sièges de valve 28a du plongeur 28 et 20a du piston 20, ce qui a pour effet d'isoler les chambres avant 16 et arrière 18 du servomoteur l'une de l'autre, la chambre arrière 18 conservant la pression réduite qui y régnait avant cette opération. Dans ce premier temps, l'écrou 44′ n'est pas encore vissé sur la tige de commande 30 de sorte que le ressort de tige 42 est complètement détendu.

Puis on applique de l'extérieur sur la tige de poussée 46 un effort égal à la force d'assistance correspondant au saut désiré du servomoteur. L'application de cette force extérieure a pour effet de faire se déformer le disque de réaction 48 d'une quantité égale à celle qu'il aurait eue lors d'un fonctionnement normal par actionnement de la tige de commande 30.

Ensuite, on amène par une poussée sur la tige de commande 30 la face avant du plongeur 28b au contact de la face arrière du disque de réaction 48 déformé. Cette mise en contact est facilement détectée par tout moyen, par exemple par une jauge de contrainte placée entre la tige de commande 30 et le dispositif qui l'actionne.

Dans cette position correspondant au saut désiré du servomoteur, les deux sièges de valve 20a et 28a du piston 20 et du palpeur 28 respectivement sont en contact avec le clapet 34, puisqu'on a appliqué au ressort de valve 38 une charge supérieure à celle qui est nécessaire à un fonctionnement normal du servomoteur. On immobilise alors la tige de commande 30 dans cette position.

Ensuite, on relâche la contrainte exercée sur le clapet 34 en dévissant le manchon 50 jusqu'au moment où le clapet 34 quitte le siège de valve 28a du plongeur 28,tout en restant en contact avec le siège de valve 20a du piston. Ceci est rendu possible grâce à l'élasticité du clapet 34 dans sa région qui coopère avec le siège de valve 20a. Le moment où le clapet 34 quitte le siège de valve 28a peut être facilement détecté car, à ce moment, la chambre arrière 18 se trouve reliée par le passage 32 à l'air sous pression atmosphérique présent autour de la tige de commande 30. La chambre avant 16 se trouvant toujours sous pression réduite, et le siège de valve 20a du piston 20 étant toujours fermé du fait de l'élasticité du clapet 34 à cet endroit, une force se crée, qui est due à la différence des pressions sur les deux faces du piston 20, et qui est donc transmise à la tige de poussée 46.

On voit donc que le moment où le siège de valve 28a quitte le clapet 34 est détecté, par exemple avec une jauge de contrainte, par l'augmentation de l'effort exercé sur la tige de poussée 46. Ce moment peut aussi être détecté par l'aspiration de l'air à l'arrière du servomoteur pour aller remplir la chambre arrière. C'est à ce moment qu'on arrête de faire tourner le manchon 50 puisqu'on a alors obtenu le réglage désiré. On immobilise alors le manchon 50 par rapport à la tige de commande 30 par tout procédé connu, comme par exemple avec un contre-écrou vissé sur la tige 30 derrière le manchon 50.

On relâche alors les contraintes exercées sur la tige de poussée 46 et sur la tige de commande 30. Le servomoteur revient alors en position de repos. On peut alors visser l'écrou 44′ sur le manchon 50 solidarisé à la tige de commande 30 pour comprimer le ressort de tige 42 et ainsi ajuster à la valeur désirée l'effort d'entrée nécessaire pour actionner le servomoteur dont on vient de régler la valeur du saut. L'écrou 44′ peut alors être solidarisé au manchon 50 par tout moyen, par exemple par un contre-écrou.

Dans ces conditions, la première phase de l'actionnement du frein telle que décrite plus haut est identique,l'effort exercé sur la tige 30 a pour seul effet de rapprocher le clapet 34 du siège 20a du piston 20. Les chambres avant 16 et arrière 18 sont isolées l'une de l'autre et la tige de poussée 46 ne subit aucun déplacement.

Par contre, on a vu plus haut qu'au cours de la deuxième phase d'actionnement du frein, c'est à dire lorsque le clapet 34 est au contact du siège 20a du piston 20 et légèrement espacé du siège 28a du plongeur, de l'air à la pression atmosphérique est admis dans la chambre arrière, ce qui a pour effet d'engendrer une force d'assistance sur le piston 20 qui se déplace alors brusquement vers l'avant jusqu'à ce que la déformation induite du disque de réaction amène la face arrière de ce dernier à venir au contact de la face avant du plongeur 28b, c'est-à-dire à remplir l'espace ou le jeu existant au repos entre ces deux faces représenté par la distance entre la face avant du plongeur 28b et la surface avant annulaire 20b du piston 20.

On voit donc que, par le déplacement du manchon 50 par rapport à la tige de commande 30, par exemple par une rotation provoquant son vissage ou son dévissage, on modifie la charge du ressort de valve 38 sur le clapet 34, et grâce à l'élasticité de ce dernier dans la partie extérieure coopérant avec le siège de valve 20a, on fait pénétrer plus ou moins le siège 20a dans le clapet 34, provoquant ainsi le réglage permettant de postionner le plongeur 28 à l'endroit nécessaire à l'obtention du saut désiré. On modifie donc à volonté le saut du servomoteur,et ceci sans qu'il soit besoin de le démonter.

## Revendications

1. Procédé de réglage de la valeur du saut d'un servomoteur d'assistance au freinage, servomoteur dans lequel sont montés de façon mobile un piston creux d'assistance (20) divisant le servomoteur en une chambre avant (16) et une chambre arrière (18), une tige de commande (30) sollicitée vers l'arrière par un ressort de tige (42) et portant un plongeur (28) logé dans le piston (20), l'extrémité arrière du plongeur (28) formant un premier siège de valve annulaire (28a) concentrique à un second siège de valve annulaire (20a) porté par le piston (20) d'assistance, les premier (28a) et second (20a) sièges de valve coopérant avec un clapet annulaire (34) porté par le piston d'assistance (20) et sollicité vers l'avant par un ressort de clapet (38), un disque de réaction (48) étant interposé entre une face avant annulaire (20b) du piston d'assistance (20) et une face arrière d'une tige de poussée (46), procédé caractérisé en ce qu'il comporte les étapes suivantes :
- mettre la chambre avant (16) en dépression,
- décharger le ressort de tige (42),
- charger le ressort de clapet (38) en le comprimant entre le clapet (34) et une partie avant d'un manchon enfilé sur la tige de commande (30),
- appliquer à la tige de poussée (46) un effort égal à la force d'assistance correspondant au saut désiré du servomoteur,
- mettre en contact la face avant du palpeur (28b) et la face arrière du disque de réaction (48),
- décharger le ressort de clapet (38) jusqu'à l'ouverture du premier siège de valve (28a), et
- charger le ressort de tige (42) au moyen d'une organe (44') mobile par rapport au manchon.

2. Procédé selon la revendication 1, caractérisé en ce que l'ouverture du premier siège de valve (28a) est détectée par la mesure d'une baisse de pression.

3. Procédé selon la revendication 1, caractérisé en ce que l'ouverture du premier siège de valve (28a) est détectée par l'augmentation de l'effort exercé sur la tige de poussée (46).

4. Procédé selon la revendication 1, caractérisé en ce que l'étape consistant à charger le ressort de tige (42) est obtenue par rotation d'un écrou (44') par rapport au manchon (50).

5. Servomoteur d'assistance au freinage dans lequel sont montés de façon mobile un piston creux d'assistance (20), une tige de commande (30) sollicitée vers l'arrière par un ressort de tige (42) et portant un plongeur (28) logé dans une partie tubulaire arrière du piston (20), l'extrémité arrière du plongeur (28) formant un premier siège de valve annulaire (28a) concentrique à un second siège de valve annulaire (20a) porté par le piston d'assistance (20), les premier (28a) et second (20a) sièges de valve coopérant avec un clapet annulaire (34) porté par le piston d'assistance (20) et sollicité vers l'avant par un ressort de clapet (38), un disque de réaction (48) étant interposé entre une face avant annulaire (20b) du piston d'assistance (20) et une face arrière d'une tige de poussée (46) et le ressort de tige (42) prenant appui sur un organe (44') solidarisé à la tige de commande en une position réglable pour permettre un réglage de la charge de ce ressort de tige, caractérisé en ce que le ressort de clapet (38) prend appui sur la face arrière du clapet annulaire (34) et sur un manchon (50) solidarisé à la tige de commande (30) en une position réglable à la fois par rapport à cette tige de commande (30) et par rapport audit organe (44'), pour permettre un réglage de la charge du ressort de clapet (38) indépendamment de la charge du ressort de tige (42).

6. Servomoteur selon la revendication 5, caractérisé en ce que la charge du ressort de clapet (38) est réglable par rotation du manchon (50) par rapport à la tige de commande (30).

7. Servomoteur selon la revendication 5, caractérisé en ce que le clapet annulaire (34) est réalisé avec un insert rigide (35) de configuration étagée en deux plans.

8. Servomoteur selon la revendication 7, caractérisé en ce que l'insert rigide (35) présente un premier plan (35a) dans la partie du clapet (34) coopérant avec le premier siège de valve (28a) et un second plan (35b) dans la partie du clapet (34) coopérant avec le second siège de valve (20a).

9. Servomoteur selon la revendication 8, caractérisé en ce que le premier plan (35a) est situé en avant du second plan (35b).

10. Servomoteur selon la revendication 5, caractérisé en ce que la charge du ressort de tige (42) est réglable par rotation de l'organe (44') par rapport au manchon 50.

## Claims

1. Method for adjusting the jump value of a brake-booster, in which booster there are movably mounted a hollow boosting piston (20) dividing the booster into a front chamber (16) and a rear chamber (18), a control rod (30) urged towards the rear by a rod spring (42) and carrying a plunger (28) housed in the piston (20), the rear end of the plunger (28) forming a first annular valve seat (28a) concentric with a second annular valve seat (20a) carried by the boosting piston (20), the first (28a) and second (20a) valve seats co-operating with an annular valve (34) carried by the boosting piston (20) and urged towards the front by a valve spring (38), a reaction disc (48) being interposed between an annular front face (20b) of the boosting piston (20) and a rear face of a pushrod (46), which method is characterized in that it consists of the following steps:
- applying a vacuum to the front chamber (16),
- unloading the rod spring (42).
- loading the valve spring (38) by compressing it between the valve (34) and a front part of a sleeve slipped onto the control rod (30),
- applying to the pushrod (46) a force equal to the boosting force corresponding to the desired jump of the booster,
- putting the front face of the sensor [sic] (28b) in contact with the rear face of the reaction disc (48),
- unloading the valve spring (38) until the opening of the first valve seat (28a), and
- loading the rod spring (42) by means of a member (44') which is movable with respect to the sleeve.

2. Method according to Claim 1, characterized in that the opening of the first valve seat (28a) is detected by measuring a drop in pressure.

3. Method according to Claim 1, characterized in that the opening of the first valve seat (28a) is detected by the increase in the force exerted on the pushrod (46).

4. Method according to Claim 1, characterized in that the step consisting in loading the rod spring (42) is obtained by rotating a nut (44') with respect to the sleeve (50).

5. Brake-booster in which are movably mounted a hollow boosting piston (20), a control rod (30) urged towards the rear by a rod spring (42) and carrying a plunger (28) housed in a tubular rear part of the piston (20), the rear end of the plunger (28) forming a first annular valve seat (28a) concentric with a second annular valve seat (20a) carried by the boosting piston (20), the first (28a) and second (20a) valve seats co-operating with an annular valve (34) carried by the boosting piston (20) and urged towards the front by a valve spring (38), a reaction disc (48) being interposed between an annular front face (20b) of the boosting piston (20) and a rear face of a pushrod (46), and the rod spring (42) bearing on a member (44') fixed to the control rod in an adjustable position to allow an adjustment of the load of this rod spring, characterized in that the valve spring (38) bears on the rear face of the annular valve (34) and on a sleeve (50) fixed to the control rod (30) in a position adjustable both relative to this control rod (30) and relative to the said member (44'), to allow an adjustment of the load of the valve spring (38) independently of the load of the rod spring (42).

6. Booster according to Claim 5, characterized in that the load of the valve spring (38) is adjustable by rotation of the sleeve (50) with respect to the control rod (30).

7. Booster according to Claim 5, characterized in that the annular valve (34) is produced with a rigid insert (35) of a configuration stepped in two planes.

8. Booster according to Claim 7, characterized in that rigid insert (35) presents a first plane (35a) in the part of the valve (34) co-operating with the first valve seat (28a) and a second plane (35b) in the part of the valve (34) co-operating with the second valve seat (20a).

9. Booster according to Claim 8, characterized in that the first plane (35a) is situated in front of the second plane (35b).

10. Booster according to Claim 5, characterized in that the load of the rod spring (42) is adjustable by rotation of the organ (44') with respect to the sleeve 50 [sic].

## Patentansprüche

1. Verfahren zum Einstellen des Sprungwertes eines Bremsunterstützungs-Servomotors, wobei in dem Servomotor ein hohler Unterstützungskolben (20) beweglich angeordnet ist, der den Servomotor in eine vordere Kammer (16) und eine hintere Kammer (18) unterteilt, sowie eine Steuerstange (30), die von einer Stangenfeder (42) nach hinten beaufschlagt ist und einen in dem Kolben (20) aufgenommenen Tauchkolben (28) trägt, wobei das hintere Ende des Tauchkolbens (28) einen ringförmigen ersten Ventilsitz (28a) bildet, der zu einem von dem Unterstützungskolben (20) getragenen, ringförmigen zweiten Ventilsitz (20a) konzentrisch ist, wobei der erste Ventilsitz (28a) und der zweite Ventilsitz (20a) mit einem ringförmigen Ventilelement (34) zusammenwirken, das von dem Unterstützungskolben (20) getragen und von einer Ventilelementfeder (38) nach vorne beaufschlagt ist, wobei zwischen einer ringförmigen Vorderseite (20b) des Unterstützungskolbens (20) und einer Hinterseite einer Schubstange (46) eine Reaktionsscheibe (48) eingesetzt ist, wobei das Verfahren dadurch gekennzeichnet ist, daß es die folgenden Schritte enthält:
- Anlegen eines Unterdrucks an die vordere Kammer (16),
- Entlasten der Stangenfeder (42),
- Belasten der Ventilelementfeder (38), indem sie zwischen dem Ventilelement (34) und einem vorderen Abschnitt einer auf die Steuerstange (30) aufgeschobenen Hülse zusammengedrückt wird,
- Aufbringen einer Kraft auf die Schubstange (46), die gleich der dem gewünschten Sprung des Servomotors entsprechenden Unterstützungskraft ist,
- Ausbilden einer Berührung zwischen der Vorderseite (28b) des Tauchkolbens und der Hinterseite der Reaktionsscheibe (48),
- Entlasten der Ventilelementfeder (38) bis zum Öffnen des ersten Ventilsitzes (28a), und
- Belasten der Stangenfeder (42) mittels eines bezüglich der Hülse beweglichen Organs (44').

2. Verfahren nach Anspruch 1, dadurch gekennzeichnet, daß das Öffnen des ersten Ventilsitzes (28a) durch das Messen eines Druckabfalles erfaßt wird.

3. Verfahren nach Anspruch 1, dadurch gekennzeichnet, daß das Öffnen des ersten Ventilsitzes (28a) durch das Erhöhen der auf die Schubstange (46) ausgeübten Kraft erfaßt wird.

4. Verfahren nach Anspruch 1, dadurch gekennzeichnet, daß der aus dem Belasten der Stangenfeder (42) bestehende Schritt durch ein Drehen einer Mutter (44') bezüglich der Hülse (50) ausgeführt wird.

5. Bremsunterstützungs-Servomotor, in welchem in beweglicher Weise ein hohler Unterstützungskolben (20) angebracht ist sowie eine Steuerstange (30), die von einer Stangenfeder (42) nach hinten beaufschlagt ist und einen in einem rohrförmigen hinteren Abschnitt des Kolbens (20) aufgenommenen Tauchkolben (28) trägt, wobei das hintere Ende des Tauchkolbens (28) einen ringförmigen ersten Ventilsitz (28a) bildet, der zu einem von dem Unterstützungskolben (20) getragenen, ringförmigen zweiten Ventilsitz (20a) konzentrisch ist, wobei der erste Ventilsitz (28a) und der zweite Ventilsitz (20a) mit einem ringförmigen Ventilelement (34) zusammenwirken, das vom Unterstützungskolben (20) getragen und von einer Ventilelementfeder (38) nach vorne beaufschlagt ist, wobei zwischen einer ringförmigen Vorderseite (20b) des Unterstützungskolbens (20) und einer Hinterseite einer Schubstange (46) eine Reaktionsscheibe (48) eingesetzt ist und sich die Stangenfeder (42) an einem fest mit der Steuerstange verbundenen Organ (44) in einer Position abstützt, die einstellbar ist, um ein Einstellen der Last der Stangenfeder zu ermöglichen, dadurch gekennzeichnet, daß die Ventilelementfeder (38) sich an einer Hinterseite des ringförmigen Ventilelementes (34) und an einer Hülse (50) abstützt, die mit der Steuerstange (30) in einer Position verbunden ist, die sowohl bezüglich dieser Steuerstange (30) als auch bezüglich des Organs (44') einstellbar ist, um ein Einstellen der Last der Ventilelementfeder (38) unabhängig von der Last der Stangenfeder (42) zu ermöglichen.

6. Servomotor nach Anspruch 5, dadurch gekennzeichnet, daß die Last der Ventilelementfeder (38) durch Drehung der Hülse (50) bezüglich der Steuerstange (30) einstellbar ist.

7. Servomotor nach Anspruch 5, dadurch gekennzeichnet, daß das ringförmige Ventilelement (34) mit einem starren Einsatz (35) mit in zwei Ebenen stufenförmiger Gestalt ausgebildet ist.

8. Servomotor nach Anspruch 7, dadurch gekennzeichnet, daß der starre Einsatz (35) eine erste ebene Fläche (35a) in dem mit dem ersten Ventilsitz (28a) zusammenwirkenden Teil des Ventilelementes (34) sowie eine zweite ebene Fläche (35b) in dem mit dem zweiten Ventilsitz (20a) zusammenwirkenden Teil des Ventilelementes (34) aufweist.

9. Servomotor nach Anspruch 8, dadurch gekennzeichnet, daß die erste ebene Fläche (35a) vor der zweiten ebenen Fläche (35b) angeordnet ist.

10. Servomotor nach Anspruch 5, dadurch gekennzeichnet, daß die Last der Stangenfeder (42) durch Drehung des Organs (44') bezüglich der Hülse (50) einstellbar ist.
